# EUROPEAN PATENT APPLICATION

(11) **EP 1 323 794 A1**
(43) Date of publication of application: **02.07.2003**
(21) Application number: 01963494.8
(22) Date of filing: 07.09.2001
(51) Int. Cl.: C09D 11/02

(54) **INK COMPOSITION FOR OFFSET PRINTING**

(30) Priority: 08.09.2000 JP 2000273726; 08.09.2000 JP 2000273727; 31.01.2001 JP 2001022750
(71) Applicant: Sakata Inx Corporation, Osaka-shi, Osaka 550-0002 (JP)
(72) Inventor: NAGAYAMA, Toshihiko, Sakata Inx Corp., Osaka-shi, Osaka 550-0002 (JP); IWASE, Koji, Sakata Inx Corp., Osaka-shi, Osaka 550-0002 (JP); HASHIMOTO, Yasuhiro, Sakata Inx Corp., Osaka-shi, Osaka 550-0002 (JP); YAI, Kenjiro, Sakata Inx Corp., Osaka-shi, Osaka 550-0002 (JP); KANEKO, Toru, Sakata Inx Corp., Osaka-shi, Osaka 550-0002 (JP); KASAMATSU, Yutaka, Sakata Inx Corp., Osaka-shi, Osaka 550-0002 (JP); KATAURA, Yuichi, Sakata Inx Corp., Osaka-shi, Osaka 550-0002 (JP)
(74) Representative: HOFFMANN - EITLE
(86) International application number: JP0107760
(87) International publication number: WO02020679

(57) **Abstract**

An offset printing ink composition is provided which has further improved drying characteristics to satisfy performances required for offset printing, such as anti-blocking properties including primary blocking resistance and secondary blocking resistance, while aiming at compatibility with the environment. The ink composition comprises mainly a coloring agent, a binder resin and a solvent containing a vegetable oil component and is characterized by further containing as a drying characteristic improver at least one member selected from the group consisting of (A) a polymer which is obtained by polymerizing at least one of olefin monomers and diene monomers, and has a solubility parameter of less than 19 (MPa)^{1/2} and is compatible with the solvent; and (B) a liquid paraffin, wherein the total amount of the improver is 0.1 to 10 % by weight in the ink composition.

## Description

### TECHNICAL FIELD

The present invention relates to an offset printing ink composition. More particularly, the invention relates to an offset printing ink composition which contains the smallest amount of harmful components possible for compatibility with the environment, and which has excellent drying characteristics (including setting property and drying property) to provide excellent anti-blocking properties wherein printed paper sheets does not cause blocking when the printed paper sheets are stored in a pile immediately after printing, and in a process of cutting the printed paper sheets.

### BACKGROUND ART

Offset printing ink commonly consists of a coloring agent, a binder resin, a solvent and others. As the solvent, hitherto inexpensive petroleum solvents such as mineral oil have been used.

Recently, growing awareness of environmental problems has also prompted the printing ink industry to take a measure for compatibility with the environment, and thus in the field of offset printing, non-VOC (VOC = volatile organic compound) or low-VOC type of offset printing ink compositions wherein all or part of mineral oil in ink is replaced by vegetable oil, for example soybean oil, have been developed as one of the environmental measures, and drawing attention (JP 5-112745 A and JP 6-93220 A).

However, mineral oils are different from vegetable oil components in fundamental properties, such as drying property and dissolving power for resin, which have a great influence on performances of ink compositions in addition to the economy mentioned above, and thus a mineral oil in an ink composition could not be easily replaced with a vegetable oil component. For example, the use of a greater amount of a vegetable oil component in an offset printing ink often causes problems including blocking of printed paper sheets when the printed paper sheets immediately after printing are stored in a pile which originates from poor setting property of the ink (hereinafter, referred to as "primary blocking"), and blocking of printed paper sheets in a process of cutting the printed paper sheets which originates from poor drying property of the ink (hereinafter, referred to as "secondary blocking").

These problems arise from the fact that vegetable oils are more viscous and have a greater capacity to dissolve resins than mineral oils, thus suppressing migration of the solvent from the printed ink into paper and leaving a greater amount of the vegetable oil component confined in a film of the printed ink.

From a viewpoint of high-speed printing and post-processability in the offset printing, it is essential for the offset printing ink to have excellent drying characteristics, for example the setting property and the drying property, but it is the present situation that it is very difficult to maintain these drying characteristics with offset printing ink compositions which are made compatible with the environment by using vegetable oils.

In view of the aforesaid problems of the prior art, it is an object of the present invention to provide an offset printing ink composition which is capable of satisfying performances required for the offset printing, such as the anti-blocking properties including primary blocking resistance and secondary blocking resistance, by improving drying characteristics of the ink composition while aiming at compatibility with the environment (including an improvement in printing work environment and providing of harmless printed matters by removal of harmful components or change to a non-VOC or low-VOC type ink).

### DISCLOSURE OF THE INVENTION

As a result of intensive studies, the present inventors have discovered that the object described above can be achieved by an offset printing ink composition containing mainly a vegetable oil component as a solvent and further containing as a drying characteristic improver at least one member selected from the group consisting of (A) a polymer which is obtained by polymerizing at least one of olefin monomers and diene monomers, has a solubility parameter of less than 19 (MPa)^{1/2} and is compatible with the solvent; and (B) a liquid paraffin.

The present invention provides the following offset printing ink compositions:
(1) An offset printing ink composition comprising mainly a coloring agent, a binder resin and a solvent containing a vegetable oil component, the ink composition further comprising as a drying characteristic improver at least one member selected from the group consisting of (A) a polymer which is obtained by polymerizing at least one of olefin monomers and diene monomers, and has a solubility parameter of less than 19 (MPa)^{1/2} and is compatible with the solvent; and (B) a liquid paraffin, wherein the total amount of the improver is 0.1 to 10 % by weight in the ink composition.
(2) The offset printing ink composition of (1) above, wherein the binder resin comprises a rosin-modified phenol resin and/or a rosin-modified maleic acid resin.
(3) The offset printing ink composition of (2) above, which contains a varnish for ink which is prepared by reacting the rosin-modified phenol resin and/or the rosin-modified maleic acid resin as the binder resin, with a cross-linking agent or a gelling agent in the presence of the drying characteristic improver and the solvent.
(4) The offset printing ink composition of any one of (1) to (3) above, wherein the polymer (A) is liquid at room temperature.
(5) The offset printing ink composition of any one of (1) to (4) above, wherein all or part of the vegetable oil component is a fatty acid ester compound derived from a vegetable oil.

The present invention provides an offset printing ink composition comprising a coloring agent, a binder resin, a vegetable oil component as a solvent, and further a drying characteristic improver. Each of the constitutes thereof will be described in detail below.

As the coloring agent, colorless or colored, inorganic or organic pigments commonly used for the offset printing ink may be used. Typical examples of the coloring agents include inorganic pigments such as titanium dioxide, barium sulfate, calcium carbonate and magnetic iron oxide, organic pigments such as azo pigments, lake pigments, phthalocyanine pigments, isoindoline pigments, anthraquinone pigments and quinacridone pigments, and carbon black. The content of the coloring agent in the offset printing ink composition is preferably about 3 to about 40 % by weight.

As the binder resin, rosin-modified phenol resins and rosin-modified maleic acid resins are preferably used. A combination of these resins may also be used.

The rosin-modified phenol resins usable in the present invention, include, for example, reaction products obtained from a rosin or a derivative thereof; and an addition-condensation product of a phenol and an aldehyde (so-called resol); and a polyhydric alcohol if necessary.

Herein, the term "rosins or derivatives thereof' is intended to refer to rosins or derivatives thereof containing carboxyl group. Examples of the rosins include gum rosins, wood rosins, tall oil rosins, disproportionated rosins, hydrogenated rosins and polymerized products of the foregoing rosins, and examples of the derivatives thereof containing carboxyl group include rosin derivatives wherein an unsaturated carboxylic acid such as maleic acid, itaconic acid or crotonic acid is added to a rosin.

Examples of phenols to be used for preparation of the phenol aldehyde addition-condensation products include phenol; alkylsubstituted phenols wherein the alkyl group is a linear, branched or cyclic alkyl group having 1 to 20 carbon atoms, such as p-cresol, m-cresol, p-propylphenol, p-tert-butylphenol, p-aminophenol, p-cyclohexylphenol, p-tert-octylphenol, p-nonylphenol, p-decylphenol, and p-dodecylphenol; aryl-substituted phenols such as phenylphenol and cumylphenol; and polyhydric phenols such as catechol, resorcin, hydroquinone, bisphenol A, bisphenol S, and bisphenol F.

Examples of aldehydes include formaldehyde, paraformaldehyde, acetaldehyde, propionaldehyde, n-butyraldehyde, isobutyraldehyde, glyoxal, and furfural.

Methods for preparing phenol aldehyde addition-condensation products from these phenols and aldehydes include a method for preparing a resol-type phenol resin wherein a phenol and an aldehyde are heated in an aqueous or organic solvent in the presence of an alkali catalyst such as sodium hydroxide, potassium hydroxide or calcium hydroxide; and another method wherein a phenol and an aldehyde are heated in an aqueous or organic solvent in the presence of an acid catalyst such as acetic acid, hydrochloric acid, phosphoric acid, hypophosphorous acid, sulfuric acid, p-toluenesulfonic acid, trifluoromethyl sulfate or trifluoromethyl acetate to give a novolak-type phenol resin, and subsequently the resulting resin is heated in the presence of an aldehyde and an alkali catalyst to give a resol-type phenol resin.

Examples of polyhydric alcohols used when necessary include aliphatic polyhydric alcohols such as glycerin, trimethylolethane, trimethylolpropane, ethoxylated trimethylolpropane, propoxylated trimethylolpropane, neopentyl glycol, pentaerythritol, dipentaerythritol, sorbitol, 1,6-hexanediol, ethylene glycol, diethylene glycol, polyethylene glycol, propylene glycol, dipropylene glycol, and polypropylene glycol.

The production of the rosin-modified phenol resins using the aforesaid materials can be conducted, for example by heating a rosin, a phenol aldehyde condensation product, and if necessary a polyhydric alcohol in any order at a high temperature, preferably in a range of 150° to 300°C.

In the above-mentioned reaction, if necessary, a reaction catalyst including an acid catalyst such as p-toluenesulfonic acid, dodecylbenzenesulfonic acid, methanesulfonic acid or ethanesulfonic acid, and a magnesium salt such as magnesium hydroxide, magnesium carbonate, magnesium bicarbonate, magnesium acetate, magnesium formate or magnesium oxalate for the purpose of accelerating the reaction; a reducing agent for the purpose of preventing coloration such as hypophosphorous acid, triphenyl phosphite or triphenyl phosphate; and a neutralizing agent for the purpose of preventing corrosion of metals such as hydroxides, oxides or carboxylates of metal including lithium, cesium, magnesium, calcium, strontium, barium, aluminum, zinc, titanium, zirconium, antimony and selenium, may be used. The reaction may be carried out under reduced pressure to accelerate the condensation reaction.

The rosin-modified phenol resin has preferably a weight-average molecular weight in a range of 10,000 to 250,000. A resin having a weight-average molecular weight of more than 250,000 has a problem of causing trouble in the preparation.

The rosin-modified maleic acid resin usable in the present invention has preferably a weight-average molecular weight in a range of 5,000 to 350,000, more preferably a weight-average molecular weight in a range of 5,000 to 250,000. A resin having a weight-average molecular weight beyond the range has a problem of causing trouble in the preparation.

When the rosin-modified phenol resin or rosin-modified maleic acid resin is subject to a reaction with a cross-linking agent or a gelling agent, both of which will be described below, the rosin-modified phenol resin or rosin-modified maleic acid resin has preferably carboxyl groups and/or hydroxyl groups in the molecule, and further an acid value of about 10 to aboout 200 mgKOH/g and a hydroxyl value of about 10 to about 100 mgKOH/g.

Other resins such as alkyd resins, polyester resins, petroleum resins, gilsonite resins and modified resins thereof may be used as the binder resin if necessary, in addition to the rosin-modified phenol resin and/or rosin-modified maleic acid resin.

The content of the binder resin is not particularly limited, but usually in a range of about 15 to about 60 % by weight, more preferably in a range of about 20 to about 60 % by weight in the offset printing ink composition.

As the solvent for the offset printing ink composition according to the present invention, a solvent containing a vegetable oil component is used. A solvent comprising a vegetable oil component alone is more preferable. Examples of the vegetable oil components include vegetable oils and aliphatic acid esters derived from the vegetable oils. The vegetable oil components may be used alone or in a combination thereof.

Examples of the vegetable oils include dry or semi-dry oils such as soybean oil, cotton oil, linseed oil, safflower oil, tung oil, tall oil, dehydrated castor oil, and canola oil, and examples of the fatty acid ester compounds derived from vegetable oil include monoalkyl ester compounds of fatty acids derived from the foregoing dry or semi-dry oils.

Fatty acids constituting the fatty acid monoesters are preferably saturated or unsaturated fatty acids having 16 to 20 carbon atoms, and examples thereof include stearic acid, isostearic acid, hydroxystearic acid, oleic acid, lenoleic acid, lenolenic acid, and eleostearic acid. Alkyl groups derived from alcohols constituting the fatty acid monoesters have preferably 1 to 10 carbon atoms, and examples of such alkyl groups include methyl, ethyl, propyl, isopropyl, butyl, isobutyl, tert-butyl and 2-ethylhexyl.

The aforesaid various vegetable oil components may be used alone or in a combination of two or more species thereof.

In the offset printing ink compositions according to the present invention, an ester compound of fatty acid derived from vegetable oil is preferably used as the vegetable oil component from a viewpoint of the setting and anti-blocking properties. The fatty acid ester compounds may be used alone or in a combination thereof. The fatty acid ester compound may be used in combination with a vegetable oil. The content of the fatty acid ester compound in the offset printing ink composition is preferably 3 % by weight or more.

As the solvent for the offset printing ink composition according to the present invention, a mineral oil (excluding liquid paraffin) incompatible with water and having a boiling temperature of not less than 160°C, preferably not less than 200°C, may be used in combination with the vegetable oil component. Examples of the mineral oils include naphthene solvents, aromatic solvents, petroleum solvents such as α-olefin oils, light oil, spindle oil, machine oil, cylinder oil, terpene oil, and mineral spirit. However, according to the object of the present invention, the use of the mineral oils is preferably avoided.

The drying characteristic improver according to the present invention will be described below.

In order to improve the drying characteristics including setting property and drying property, an offset printing ink composition according to the present invention contains as a drying characteristic improver at least one member selected from the group consisting of (A) a polymer which is obtained by polymerizing at least one of olefin monomers and diene monomers, and has a solubility parameter of less than 19 (MPa)^{1/2} and is compatible with the solvent mentioned above; and (B) a liquid paraffin.

Examples of polymer (A) which is obtained by polymerizing at least one of olefin monomers and diene monomers, and has a solubility parameter of less than 19 (MPa)^{1/2} and is compatible with the solvent component include homopolymers and copolymers of olefin monomers, and homopolymers and copolymers of diene monomers, and copolymers of olefin and diene monomers. Specific examples thereof include polyisobutylene, polybutadiene, polyisoprene, and isoprene-isobutylene copolymer. Preferably, polymer (A) has a solubility parameter in a range of 15 to 18 (MPa)^{1/2} and more preferably is liquid at room temperature.

The solubility parameter can be determined according to "dissolution method" or "swelling method". The solubility parameters of main polymers can be referred to "Polymer Handbook" (J. Brandrup and E. H. Immergut, Polymer Handbook 3rd. ed., John Wiley & Sons, Inc., New York, 1989, Section VII).

Polymer (A) which is incompatible with the solvent component is not sufficiently miscible with other components. Further, polymer (A) having a solubility parameter of more than the foregoing range is excessively compatible with other components, and is thus unable to improve the setting and anti-blocking properties of the ink composition.

Liquid paraffin (B) used as the drying characteristic improver is a mineral oil comprising mainly a mixture of three components of normal paraffin, isoparaffin and monocyclic cycloparaffin, which is obtained by highly refining a lubricating oil fraction through a sulfuric acid washing or the like.

From a viewpoint of environment, workability, and hygiene, a liquid paraffin which is refined to a level that no impurities that absorb ultraviolet ray are substantially contained, and which passes at least one of the purity test of liquid paraffin prescribed in the Japanese Pharmacopoeia, the purity test of liquid paraffin prescribed in the Japanese Standard for Food Additives and the purity test of liquid paraffin prescribed in the Japanese Standards of Cosmetic Ingredients, depending on the applications, is more preferable. These three purity tests and standards for liquid paraffin are described in the fourteenth revised Japanese Pharmacopoeia, the seventh edition of Official Standards for Food Additives, and the Standards of Cosmetic Ingredients based on Notification No. 181 of the Ministry of Public Welfare, respectively, as the newest ones.

Specific examples of the liquid paraffins include Moresco White P-40, P-55, P-60, P-70, P-80, P-85, P-100, P-120, P-150, P-200, P-230, P-260, P-300, P-350P and P-500 available from Matsumura Oil Research Corp.; and S-type liquid paraffins available from Chuo Kasei Co., Ltd. such as 40-S, 55-S, 60-S, 70-S, 80-S, 90-S, 100-S, 120-S, 150-S, 260-S and 350-S. These liquid paraffins may be used alone or in a combination thereof, considering viscosity of the resulting ink composition and the like.

The use of at least one selected from the aforesaid drying characteristic improvers allows a marked improvement in the drying characteristics of the offset printing ink composition. This is presumed to be because polymer (A) having a solubility parameter remote from that of the binder resin or liquid paraffin (B) is dissolved into the solvent component of the ink composition, making easier separation of the solvent as a whole from the resin component.

In the present invention, the amount of the drying characteristic improver is in a range of 0.1 to 10 % by weight in the offset printing ink varnish. When the amount of the drying characteristic improver is less than this range, it does not allow sufficient improvement in the primary blocking resistance and the secondary blocking resistance, and when the amount is more than the range, it does not allow sufficient improvement in performances such as gloss and storage stability of the ink. In the case when liquid paraffin is used as the drying characteristic improver, the amount of the liquid paraffin is preferably in a range of 0.5 to 10 % by weight, more preferably in a range of 1 to 10 % by weight in the offset printing ink varnish.

However, as the optimal amount of the drying characteristic improver varies depending on the kind of the drying characteristic improver itself and the kind of the binder resins used, the optimal amount is preferably selected within the aforesaid range.

The offset printing ink composition of the invention may further contain additives such as a pigment dispersant, a dryer, an antioxidant, a water-holding agent for non-image area, an abrasion resistance improver, an anti-offset agent, and a nonionic surface active agent.

To prepare the offset printing ink composition of the present invention from the aforesaid materials, any conventional methods may be utilized.

For example, one method is as follows: First, a binder resin is dissolved into a solvent under heating to give a varnish for ink. Then a coloring agent and, if necessary, a solvent, a pigment dispersant and the like are added to the varnish, and the resulting mixture is ground in a beads mill, a three-roll mill or other mills to give a base composition for an offset printing ink. Finally, remaining materials are added to the base composition, yielding an offset printing ink composition.

In this production method, a drying characteristic improver may be added in any of the steps. However, in the case that the drying characteristic improver is polymer (A), polymer (A) is preferably contained in a varnish for ink. Specifically it is preferable to prepare an ink by using a varnish for ink which is obtained by reacting a binder resin, especially a rosin-modified phenol resin and/or a rosin-modified maleic acid resin, with a cross-linking agent or a gelling agent in the presence of polymer (A) and a solvent.

Examples of practical methods for obtaining a vanish for ink by reacting a binder resin with a cross-linking agent or a gelling agent in the presence of polymer (A) or liquid paraffin (B) as a drying characteristic improver include the following methods (1) and (2):

### Method (1)

A mixture comprising 20 to 60 % by weight of a binder resin, 0.5 to 15 % by weight of at least one drying characteristic improver selected from polymer (A) and liquid paraffin (B), a solvent comprising mainly a vegetable oil component, and a cross-linking agent or a gelling agent is heated at 150° to 300°C for about 30 minutes to about 2 hours to give a varnish for ink.

### Method (2)

A mixture comprising 20 to 60 % by weight of a binder resin, 0.5 to 15 % by weight of at least one drying characteristic improver selected from polymer (A) and liquid paraffin (B), and a solvent comprising mainly a vegetable oil component is heated at 150° to 300°C for about 30 minutes to about 2 hours to dissolve the resin being a solid matter. Then, a cross-linking agent or a gelling agent is added to the binder resin and the resultant mixture is heated at 150° to 240°C for about 30 minutes to about 2 hours to give a varnish for ink.

The varnish for ink thus obtained is preferably contained at a content of 20 to 80 % by weight in the offset printing ink composition, and the content of the drying characteristic improver is adjusted to be 0.1 to 10 % by weight.

Examples of the cross-linking agents for use in the aforesaid method include isocyanate compounds such as tolylene diisocyanate, isophorone diisocyanate, hexamethylene diisocyanate, tetramethylxylylene diisocyanate, and polymethylenepolyphenyl polyisocyanate. Examples of the gelling agents include aziridine compounds such as trimethylolpropane-tris-β-N-aziridinylpropionate and pentaerythritolpropane-tris-β-N-aziridinylpropionate; epoxy compounds such as glycerol polyglycidyl ether, and trimethylolpropane polyglycidyl ether; aluminum chelate compounds such as (ethyl acetoacetato)aluminum diisopropoxide, and aluminum tris-(ethyl acetoacetate); and aluminum alcoholates such as aluminum triisopropoxide, mono-sec-butoxyaluminum diisopropoxide, and aluminum tri-(sec-butoxide).

The offset printing ink composition thus obtained according to the present invention contains the smallest amount of harmful components possible for compatibility with the environment, and has excellent drying characteristics (including setting property and drying property) to provide excellent anti-blocking properties wherein none of the primary blocking and the secondary blocking occur. Furthermore, an offset printing ink composition enhanced in the aforesaid effects can be obtained by utilizing a varnish for ink prepared by reacting a binder resin with a cross-linking agent or a gelling agent in the presence of a drying characteristic improver specified in the present invention.

### BEST MODES FOR CARRYING OUT THE INVENTION

Offset printing ink compositions and production methods thereof according to the present invention will be described in detail by way of the following Examples. It is understood that the present invention is not limited to specific Examples without departing from the spirit and scope thereof. In the following description, "parts" means "parts by weight".

### Preparation of varnishes for offset printing ink

### Varnish 1A

Into a four necked flask equipped with a condenser, a thermometer and an agitator, rosin-modified phenol resin A having a weight average molecular weight of 90,000 and an acid value of 15 mgKOH/g (made by Hitachi Kasei Polymer Co., Ltd.), soybean oil and mineral oil (AF Solvent No. 6, made by Nippon Petrochemicals Co., Ltd., hereinafter the same) were added according to the formula shown in Table 1-1 (the amount of each component is expressed in parts, hereinafter the same). The mixture was heated to 200°C and kept at the temperature for 1 hour to dissolve the components. (Ethyl acetoacetato)aluminum diisopropoxide (ALCH, made by Kawaken Fine Chemicals Co., Ltd.) as a gelling agent was added to the mixture according to the formula shown in Table 1-1, and the resulting mixture was heated at 170°C for 60 minutes to give varnish 1A.

### Varnish 1B

The same procedures as in the method of obtaining Vanish 1A except that rosin-modified phenol resin A was replaced by rosin-modified phenol resin B having a weight average molecular weight of 140,000 and an acid value of 15 mgKOH/g (made by Hitachi Kasei Polymer Co., Ltd.) were repeated to give varnish 1B.

### Varnish 1C

Into a four necked flask equipped with a condenser, a thermometer and an agitator, fatty acid ester A (methyl ester of soybean oil fatty acid, made by Lawter Inc.), rosin-modified phenol resin A, soybean oil and the mineral oil were added according to the formula shown in Table 1-1. The mixture was heated to 200°C. and kept at the temperature for 1 hour to dissolve the components. After addition of the gelling agent according to the formula shown in Table 1-1, the mixture was heated at 170°C for 60 minutes to give varnish 1C.

### Varnish 1D

The same procedures as in the method of obtaining Vanish 1C except that fatty acid ester A was replaced by fatty acid ester B (isobutyl ester of soybean oil fatty acid, made by Lawter Inc.) were repeated to give varnish 1D.

### Varnish 1E

Into a four necked flask equipped with a condenser, a thermometer and an agitator, rosin-modified phenol resin A, soybean oil, and fatty acid ester A were added according to the formula shown in Table 1-1. The mixture was heated to 200°C and kept at the temperature for 1 hour to dissolve the components. After addition of the gelling agent according to the formula shown in Table 1-1, the mixture was heated at 170°C for 60 minutes to give varnish 1E.

### Varnish 1F

The same procedures as in the method of obtaining Vanish 1E except that fatty acid ester A was replaced by fatty acid ester B were repeated to give varnish 1F.

### Preparation of offset printing ink compositions

### Examples 1-1 to 1-13

Each of varnishes 1A to 1F, and carbon black (MA-7, made by Mitsubishi Chemical Corp., hereinafter the same) were mixed according to the formula shown in Table 1-2 (the amount of each component is expressed in parts, hereinafter the same). Each mixture was then ground by a bead mill and a three-roll mill in sequence to provide each ink base. Subsequently, polybutadiene which is liquid at room temperature and has a solubility parameter of 17.2 (MPa)^{1/2} and a number average molecular weight of 3,000 (hereinafter referred to as "polybutadiene A"), polyisoprene which is liquid at room temperature and has a solubility parameter of 16.6 (MPa)^{1/2} (hereinafter referred to simply as "polyisoprene"), polyisobutylene which is liquid at room temperature and has a solubility parameter of 15.2 (MPa)^{1/2} (hereinafter referred to simply as polyisobutylene), a wax compound (polyethylene wax compound, made by Shamrock Chemicals Corp., hereinafter the same), a dryer (metallic soap, hereinafter the same), the mineral oil, fatty acid ester A and fatty acid ester B were added to each of the ink bases according to the formula shown in Table 1-2. The resulting mixture was stirred to give each offset printing ink composition according to Examples 1-1 to 1-13. Herein, the ink compositions of Examples 1-1 to 1-9 contain mineral oil, while the ink compositions of Examples 1-10 to 1-13 do not contain mineral oil.

### Comparative Examples 1-1 to 1-4

Varnish 1A or varnish 1E, and carbon black were mixed according to the formula shown in Table 1-2 and ground by means of a bead mill and a three-roll mill in sequence to provide each ink base. Subsequently, polybutadiene A, polymethyl acrylate having a solubility parameter of 20.7, the wax compound, the dryer, the mineral oil, and fatty acid ester A were added to each of the ink bases according to the formula shown in Table 1-2, and the resulting mixture was stirred to give each offset printing ink composition according to Comparative Examples 1-1 to 1-4. Herein, the ink compositions of Comparative Examples 1-1 to 1-3 contain mineral oil, while the ink composition of Comparative Example 1-4 does not contain mineral oil.

### Performance evaluation tests

Each of the offset printing ink compositions of Examples 1-1 to 1-13 and Comparative Examples 1-1 to 1-4 was subjected to the following evaluation tests for printing performance.

### (1) Gloss

Each of the offset printing ink compositions was printed onto a coated paper sheet by means of a RI tester (manufactured by Kabusiki Kaisha Akira Seisakusho). After the printed paper sheet was allowed to stand at a room temperature for one day, 60°-60° Reflectance thereof was measured by means of a gloss meter (digital gloss meter manufactured by Murakami Shikisai Gijyutu Kenkyusho).

### (2) Setting property

Each of the offset printing ink compositions was printed onto a coated paper sheet by means of the RI tester (manufactured by Kabushiki Kaisha Akira Seisakusho). The degree to which the printed ink on the printed coated paper sheet adhered to a high-quality paper was observed by means of an automatic ink setting tester (manufactured by Kabushiki Kaisha Toyo Seiki Seisakusho) and the period of time (minute) required until the printed ink no longer adhere to the high-quality paper was measured. Shorter the period of time, better the setting property of the ink composition.

### (3) Primary blocking resistance

Each of the offset printing ink compositions was printed onto sheets of a coated paper (NK-High Coat 73K, made by Nippon Kakoshi Kabushiki Kaisha) by means of a sheet-fed offset printing machine, and 10,000 sheets of the printed papers were stored in a pile at room temperature for 24 hours. The degree of blocking of the piled sheets was evaluated by visual examination according to the following criteria. An offset printing ink composition which is excellent in this evaluation is excellent in primary blocking resistance.
3. Low frequency of blocking
2. Medium frequency of blocking
1. High frequency of blocking

### (4) Secondary blocking resistance

Each of the offset printing ink compositions was printed onto a coated paper (NK-High Coat 73K, made by Nippon Kakoshi Kabushiki Kaisha) by means of a sheet fed offset printing machine, and the printed papers were stored at room temperature for 24 hours. Subsequently, 200 sheets of the printed papers in pile were processed by means of a cutting machine. The degree of blocking was evaluated by visual examination according to the following criteria. An offset printing ink composition which is excellent in this evaluation is excellent in secondary blocking resistance and drying property.
3. Low frequency of blocking
2. Medium frequency of blocking
1. High frequency of blocking

### Evaluation results

The results of the performance evaluation tests for the offset printing ink compositions containing mineral oils of Examples 1-1 to 1-9 and Comparative Examples 1-1 to 1-3 are shown in Table 1-3. The results of the same tests for each of the offset printing ink compositions not containing mineral oils of Examples 1-10 to 1-13 and Comparative Example 1-4 are shown in Table 1-4.

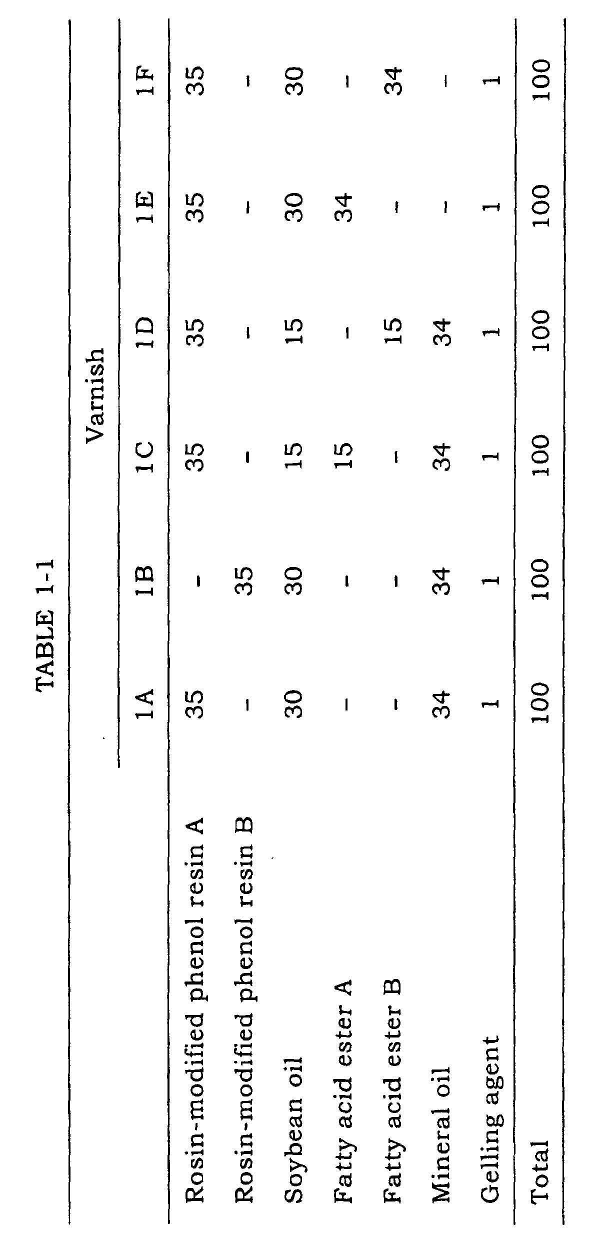

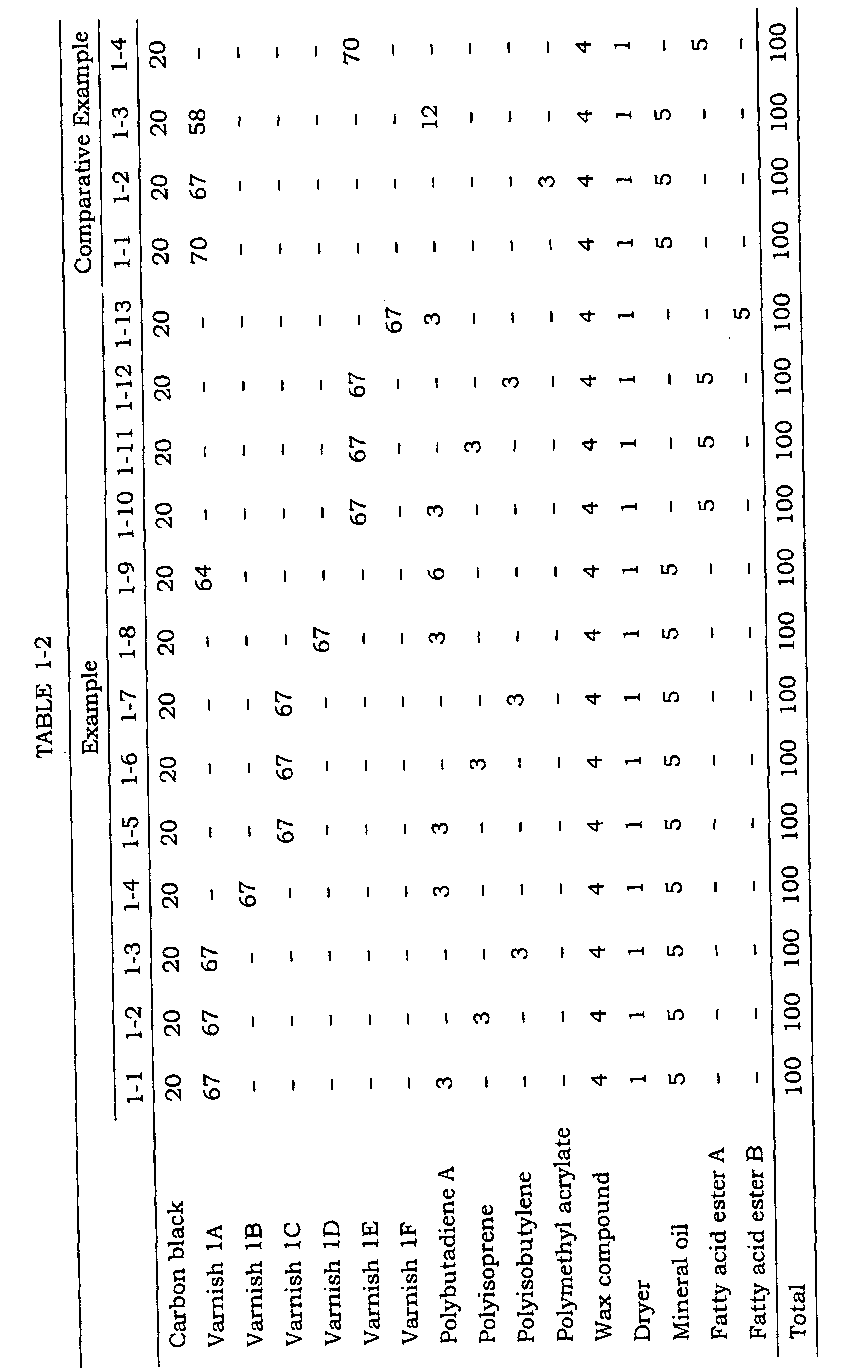

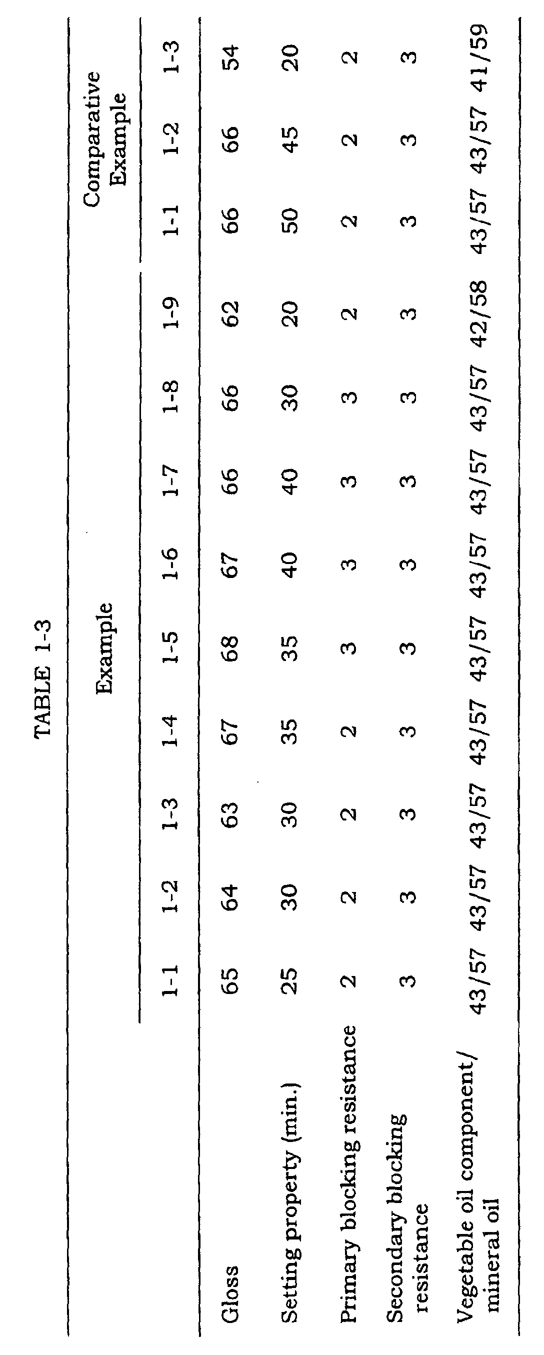

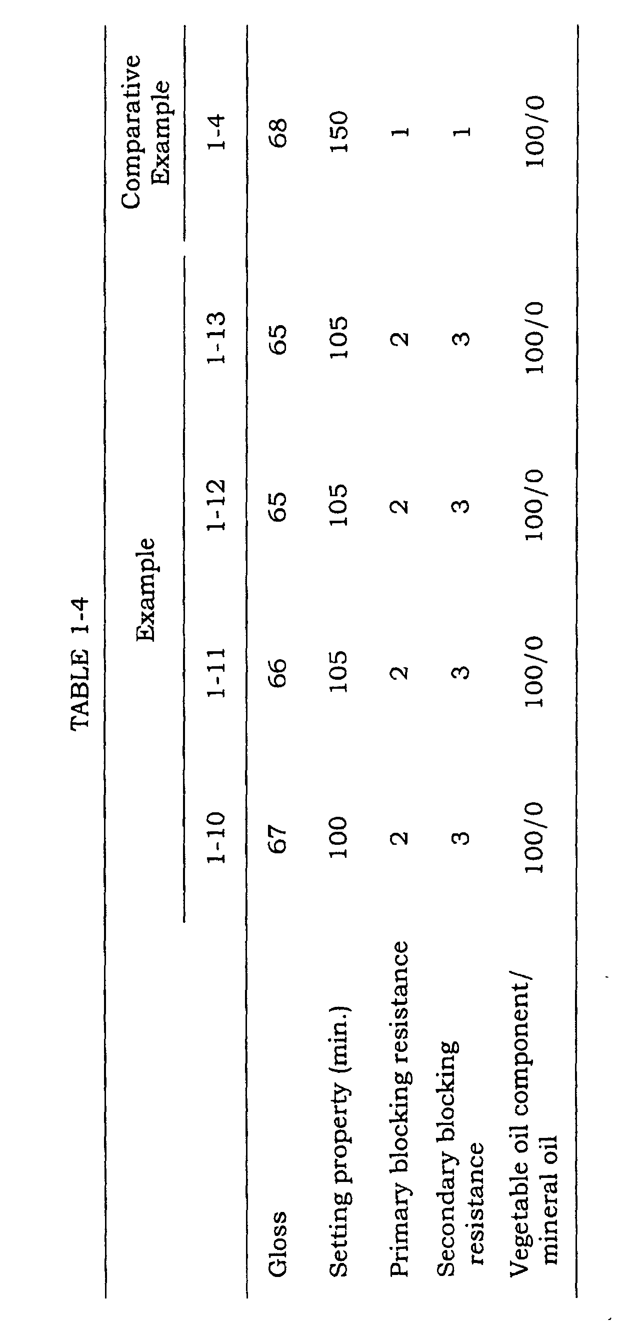

### Preparation of varnishes for offset printing ink

### Varnish 2A

Into a four-necked flask equipped with a condenser, a thermometer and an agitator, rosin-modified phenol resin C having a weight average molecular weight of 63,000 and an acid value of 18 mgKOH/g (made by Hitachi Kasei Polymer Co., Ltd.), the soybean oil, the mineral oil and polybutadiene A which is liquid at room temperature and has a solubility parameter of 17.2 (MPa)^{1/2} and a number average molecular weight of 3,000 were added according to the formula shown in Table 2-1 (the amount of each of components is expressed by parts, hereinafter the same). The resulting mixture was heated to 200°C and kept at the same temperature for 1 hour to dissolve the components. After addition of (ethyl acetoacetato) aluminum diisopropoxide (ALCH made by Kawaken Fine Chemicals Co., Ltd, hereinafter the same) as a gelling agent according to the formula shown in Table 2-1, the resulting mixture was heated at 170°C for 60 minutes to give varnish 2A.

### Varnish 2B

Into a four-necked flask equipped with a condenser, a thermometer and an agitator, rosin-modified phenol resin C, the soybean oil, the mineral oil, polybutadiene A and the gelling agent were added according to the formulation shown in Table 2-1. The mixture was heated to 200°C and kept at the same temperature for 1 hour to give varnish 2B.

### Varnish 2C

The same procedures as in the method of obtaining Vanish 2A except that rosin-modified phenol resin C was replaced by rosin-modified phenol resin D having a weight average molecular weight of 130,000 and an acid value of 15 mgKOH/g (made by Hitachi Kasei Polymer Co., Ltd.) were repeated to give varnish 2C.

### Varnish 2D

Into a four-necked flask equipped with a condenser, a thermometer and an agitator, an alkyd resin having a weight average molecular weight of 7,000 and an acid value of 11 mgKOH/g (made by Dainippon Ink & Chemicals, Inc., hereinafter the same), rosin-modified phenol resin C, the soybean oil, the mineral oil, and polybutadiene A were added according to the formula shown in Table 2-1. The mixture was heated to 200°C and kept at the same temperature for 1 hour to dissolve the components. After addition of the gelling agent according to the formula shown in Table 2-1, the mixture was heated at 170°C for 60 minutes to give varnish 2D.

### Varnish 2E

The same procedures as in the method of obtaining Vanish 2A except that the soybean oil was replaced by linseed oil were repeated to give varnish 2E.

### Varnish 2F

Into a four-necked flask equipped with a condenser, a thermometer and an agitator, fatty acid ester A (soybean fatty acid methyl ester made by Lawter Inc.), rosin-modified phenol resin C, the soybean oil, the mineral oil and polybutadiene A were added according to the formula shown in Table 2-1. The mixture was heated to 200°C and kept at the same temperature for 1 hour to dissolve the components. After addition of the gelling agent according to the formula shown in Table 2-1, the mixture was heated at 170°C for 60 minutes to give varnish 2F.

### Varnish 2G

Into a four-necked flask equipped with a condenser, a thermometer and an agitator, polybutadiene which is liquid at room temperature and has a solubility parameter of 16.9 (MPa)^{1/2} and a number average molecular weight of 1,000 (hereinafter referred to as "polybutadiene B"), rosin-modified phenol resin A, the soybean oil and the mineral oil were added according to the formula shown in Table 2-1. The mixture was heated to 200°C and kept at the same temperature for 60 minutes to dissolve the components. After addition of the gelling agent according to the formula shown in Table 2-1, the mixture was heated at 170°C for 60 minutes to give varnish 2G.

### Varnish 2H and 2I

Into a four-necked flask equipped with a condenser, a thermometer and an agitator, rosin-modified phenol resin C, the soybean oil, the mineral oil, and polybutadiene A were added according to the formula shown in Table 2-1. The mixture was heated to 200°C and kept at the same temperature for 1 hour to dissolve the components. After addition of the gelling agent according to the formula shown in Table 2-1, the mixture was heated at 170°C for 60 minutes to give varnish 2H or 2I.

### Varnish 2J

Into a four-necked flask equipped with a condenser, a thermometer and an agitator, rosin-modified phenol resin C, the soybean oil, the mineral oil, and polybutadiene A were added according to the formula shown in Table 2-1. The mixture was heated to 200°C and kept at the same temperature for 1 hour to dissolve the components. After addition of the gelling agent according to the formula shown in Table 2-1, the mixture was heated at 170°C for 60 minutes to give varnish 2J.

### Varnish 2K and 2L

Into a four-necked flask equipped with a condenser, a thermometer and an agitator, rosin-modified phenol resin C, the soybean oil, the mineral oil, polyisoprene which is liquid at room temperature and having a solubility parameter of 16.6 (MPa)^{1/2}, and polyisobutylene which is liquid at room temperature and has a solubility parameter of 15.2 (MPa)^{1/2} were added according to the formula shown in Table 2-1. The mixture was heated to 200°C and kept at the same temperature for 1 hour to dissolve the components. After addition of the gelling agent according to the formula shown in Table 2-1, the mixture was heated at 170°C for 60 minutes to give varnish 2K or 2L.

### Varnish 2M

Into a four-necked flask equipped with a condenser, a thermometer and an agitator, rosin-modified phenol resin C, the soybean oil, and the mineral oil were added according to the formula shown in Table 2-1. The mixture was heated to 200°C and kept at the same temperature for 1 hour to dissolve the components. After addition of the gelling agent according to the formula shown in Table 2-1, the mixture was heated at 170°C for 60 minutes to give varnish 2M.

### Varnish 2N

Into a four-necked flask equipped with a condenser, a thermometer and an agitator, rosin-modified phenol resin C, the soybean oil, the mineral oil, and polybutadiene A were added according to the formula shown in Table 2-1. The mixture was heated to 200°C and kept at the temperature for 1 hour to dissolve the components. After addition of the gelling agent according to the formula shown in Table 2-1, the mixture was heated at 170°C for 60 minutes to give varnish 2N.

### Preparation of offset printing ink compositions

### Examples 2-1 to 2-12

Each of varnishes 2A to 2L and carbon black were mixed according to the formula shown in Table 2-2 (the amount of each component is expressed in parts, hereinafter the same), and the resulting mixture was ground in a bead mill and a three-roll mill in sequence to give each ink base. Subsequently, the wax compound, the dryer, the mineral oil, and fatty acid ester A were added to the ink base according to the formula shown in Table 2-2. The mixture was stirred to give each offset printing ink composition according to Examples 2-1 to 2-12. Herein, all the ink compositions of Examples 2-1 to 2-12 contain mineral oil.

### Comparative Examples 2-1 and 2-2

Varnish 2M or Varnish 2N, and carbon black were mixed according to the formula shown in Table 2-2. The mixture was ground in a bead mill and a three-roll mill in sequence to give each ink base. The wax compound, the dryer, and the mineral oil were added to the ink base according to the formula shown in Table 2-2, and the resulting mixture was stirred to give each offset printing ink composition according to Comparative Examples 2-1 and 2-2. The ink compositions of Comparative Examples 2-1 and 2-1 also contain mineral oil.

### Performance evaluation tests

The performance evaluation tests for the offset printing ink compositions of Examples 2-1 to 2-12 and Comparative Examples 2-1 and 2-2 in regard to gloss, setting property, primary blocking resistance and secondary blocking resistance were carried in the same manner as in Examples 1-1 to 1-13. Additionally, storage stability of the offset printing ink compositions was evaluated.

### (5) Storage stability

Each of the offset printing ink compositions was placed in two airtight containers. One container was stored at room temperature, and the other container was stored at 60°C, for twenty-four hours. Viscosity of each of the ink compositions was measured by Raleigh viscometer and a spreadmeter, and storage stability of each ink was evaluated according to the following criteria.
3. Small change in viscosity (practically with no problem)
2. Medium change in viscosity (practically with little problem)
1. Large change in viscosity (practically with some problem).

### Evaluation results

The results of the performance evaluation tests for the offset printing ink compositions of Examples 2-1 to 2-12 and Comparative Examples 2-1 and 2-2 are shown in Table 2-3.

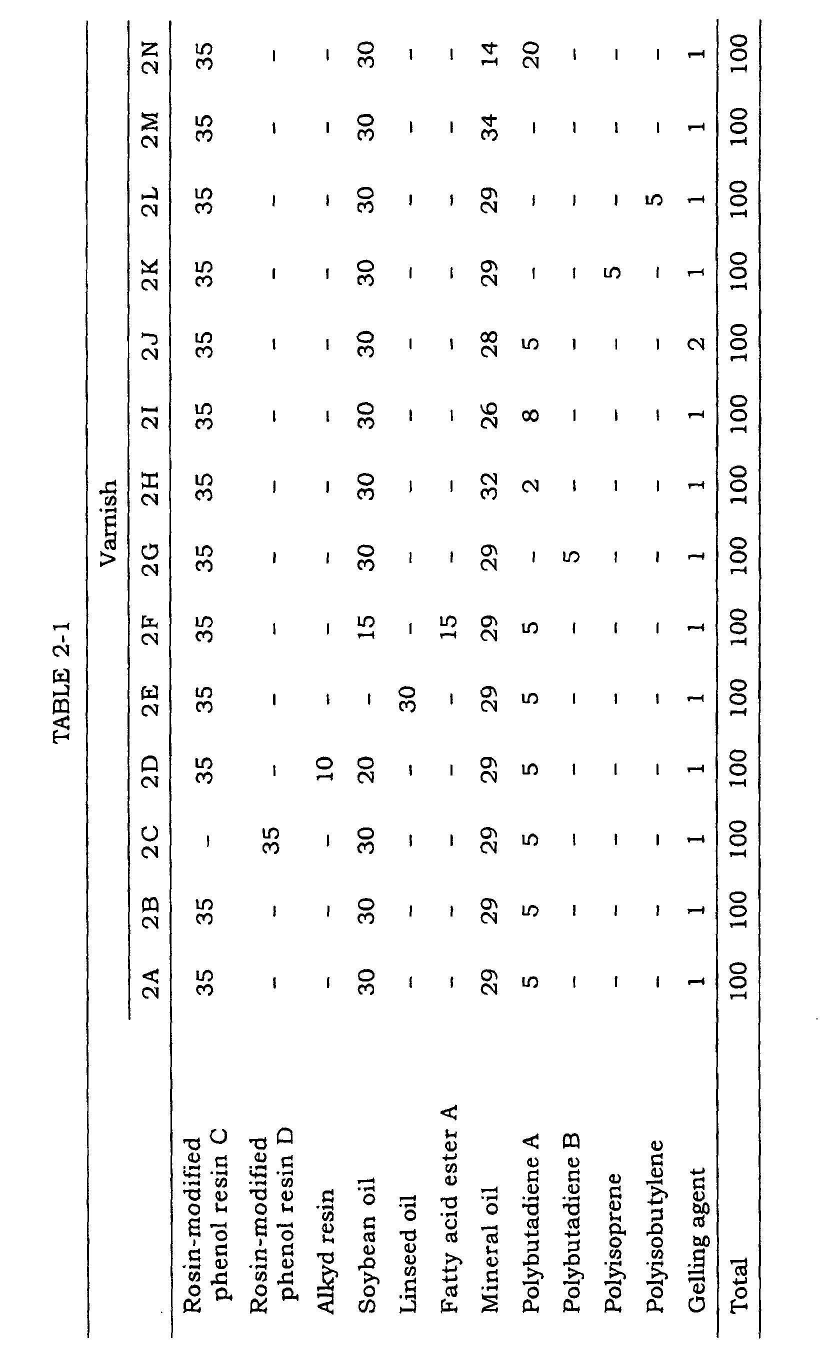

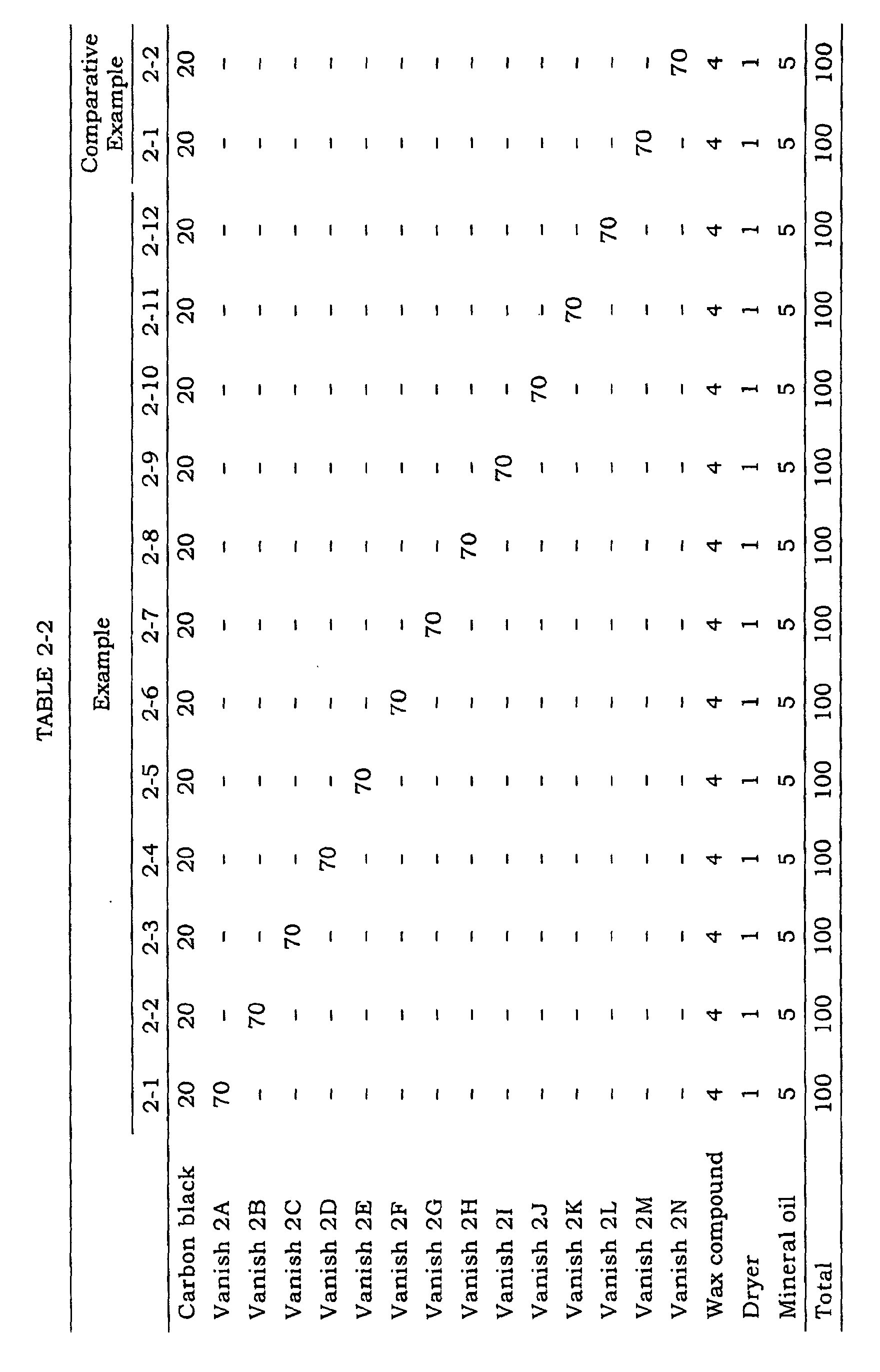

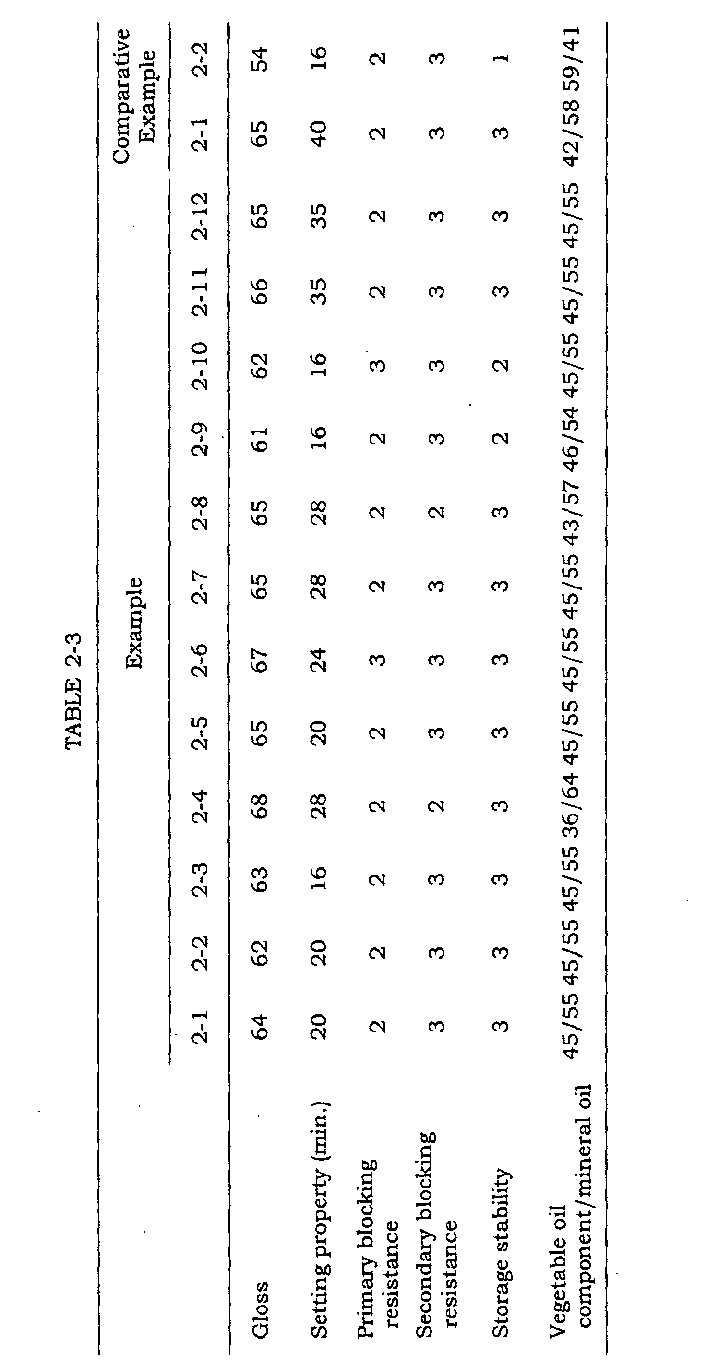

### Preparation of varnishes for offset printing ink

### Varnish 3A

Into a four-necked flask equipped with a condenser, a thermometer and an agitator, rosin-modified phenol resin E having a weight average molecular weight of 100,000 and an acid value of 15 mgKOH/g (made by Hitachi Kasei Polymer Co., Ltd.), the soybean oil, and fatty acid ester B (soybean oil fatty acid isobutyl ester, made by Lawter Inc.) were added according to the formula shown in Table 3-1 (the amount of each component is expressed in parts, hereinafter the same). The mixture was heated to 200°C and kept at the same temperature for 1 hour to dissolve the components. After addition of (ethyl acetoacetato)aluminum diisopropoxide (ALCH, made by Kawaken Fine Chemicals, Co. Ltd.) as a gelling agent according to the formula shown in Table 3-1, the mixture was heated with stirring at 170°C for 1 hour to give varnish 3A.

### Varnish 3B

The same procedures as in the method of obtaining varnish 3A except that rosin-modified phenol resin E was replaced by rosin-modified phenol resin F having a weight average molecular weight of 150,000 and an acid value of 15 mgKOH/g (made by Hitachi Kasei Polymer Co., Ltd.) were repeated to varnish 3B.

### Varnish 3C

Into a four-necked flask equipped with a condenser, a thermometer and an agitator, rosin-modified phenol resin E, the soybean oil, and fatty acid ester A (soybean oil fatty acid methyl ester made by Lawter Inc.) were added according to the formula shown in Table 3-1. The mixture was heated to 200°C and kept at the same temperature for 1 hour to dissolve the components. After addition of (ethyl acetoacetato)aluminum diisopropoxide (ALCH) as a gelling agent according to the formula shown in Table 3-1, the mixture was heated with stirring at 170°C for 1 hour to give varnish 3C.

### Varnish 3D

Into a four-necked flask equipped with a condenser, a thermometer and an agitator, rosin-modified phenol resin E, the soybean oil, fatty acid ester B and liquid paraffin A (Moresco White P-350P, made by Matsumura Oil Research Corp.) were added according to the formula shown in Table 3-1. The mixture was heated to 200°C and kept at the same temperature for 1 hour to dissolve the components. After addition of (ethyl acetoacetato)aluminum diisopropoxide (ALCH) as a gelling agent according to the formula shown in Table 3-1, the mixture was heated with stirring at a temperature of 170°C for 1 hour to give varnish 3D.

### Varnish 3E

Into a four-necked flask equipped with a condenser, a thermometer and an agitator, rosin-modified phenol resin E, the soybean oil, and fatty acid ester B were added according to the formula shown in Table 3-1. The mixture was heated to 200°C and kept at the same temperature for 1 hour to dissolve the components. After addition of diphenylmethane diisocyanate (MDI) as a cross-linking agent according to the formula shown in Table 3-1, the mixture was heated with stirring at 100°C for 3 hours to give varnish 3E.

### Varnish 3F

Into a four-necked flask equipped with a condenser, a thermometer and an agitator, rosin-modified phenol resin E, and the soybean oil were added according to the formula shown in Table 3-1. The mixture was heated to 200°C and kept at the same temperature for 1 hour to dissolve the components. After addition of (ethyl acetoacetato)aluminum diisopropoxide (ALCH made by Kawaken Fine Chemicals Co, Ltd.) as a gelling agent according to the composition shown in Table 3-1, the mixture was heated with stirring at 170°C for 1 hour to give varnish 3F.

### Varnish 3G

Into a four-necked flask equipped with a condenser, a thermometer and an agitator, rosin-modified phenol resin E, the soybean oil, and fatty acid ester B were added according to the formula shown in Table 3-1. The mixture was heated to 200°C and kept at the same temperature for 1 hour to dissolve the components, giving varnish 3G.

### Preparation of offset printing ink compositions

### Examples 3-1 and 3-2

Varnish 3A or 3B, and carbon black were mixed according to the formula shown in Table 3-2 (the amount of each component is expressed in parts, hereinafter the same), and the resulting mixture was ground in a bead mill and a three-roll mill in sequence to give each ink base. Subsequently, liquid paraffin A, fatty acid ester B, the wax compound and the dryer were added to the ink base, and the resulting mixture was stirred to give offset printing ink compositions according to Examples 3-1 and 3-2.

### Example 3-3

Varnish 3C and carbon black were mixed according to the formula shown in Table 3-2, and the resulting mixture was ground in a bead mill and a three-roll mill in sequence to give an ink base. Subsequently, liquid paraffin A, fatty acid ester A, the wax compound and the dryer were added to the ink base, and the resulting mixture was stirred to give an offset printing ink composition according to Example 3-3.

### Example 3-4

Varnish 3D and carbon black were mixed according to the formula shown in Table 3-2, and the resulting mixture was ground in a bead mill and a three-roll mill in sequence to give an ink base. Subsequently, fatty acid ester B, the wax compound and the dryer were added to the ink base, and the resulting mixture was stirred to give an offset printing ink composition according to Example 3-4.

### Example 3-5

Varnish 3A and carbon black were mixed according to the formula shown in Table 3-2, and the resulting mixture was ground in a bead mill and a three-roll mill in sequence to give an ink base. Subsequently, liquid paraffin A, fatty acid ester B, the wax compound and the dryer were added to the ink base, and the mixture was stirred to give an offset printing ink composition according to Example 3-5.

### Example 3-6

Varnish 3A and carbon black were mixed according to the formula shown in Table 3-2, and the resulting mixture was ground in a bead mill and a three-roll mill in sequence to give an ink base. Subsequently, liquid paraffin B (Moresco White P-55, made by Matsumura Oil Resarch Corp.), fatty acid ester B, the wax compound and the dryer were added to the ink base, and the mixture was stirred to give an offset printing ink composition according to Example 3-6.

### Example 3-7

Varnish 3E and carbon black were mixed according to the formula shown in Table 3-2, and the resulting mixture was ground in a bead mill and a three-roll mill in sequence to give an ink base. Subsequently, liquid paraffin A, fatty acid ester B, the wax compound and the dryer were added to the ink base, and the mixture was stirred to give an offset printing ink composition according to Example 3-7.

### Example 3-8

Varnish 3F and carbon black were mixed according to the formula shown in Table 3-2, and the resulting mixture was ground in a bead mill and a three-roll mill in sequence to give an ink base. Subsequently, the soybean oil, liquid paraffin A, the wax compound and the dryer were added to the ink base, and the mixture was stirred to give an offset printing ink composition according to Example 3-8.

### Example 3-9

Varnish 3G and carbon black were mixed according to the formula shown in Table 3-2, and the resulting mixture was ground in a bead mill and a three-roll mill in sequence to give an ink base. Subsequently, liquid paraffin A, fatty acid ester B, the wax compound and the dryer were added to the ink base, and the mixture was stirred to give an offset printing ink composition according to Example 3-9.

### Comparative Examples 3-1 to 3-3

Varnish 3A, 3F or 3G, and carbon black were mixed according to the formula shown in Table 3-2, and each resulting mixture was ground in a bead mill and a three-roll mill in sequence to give an ink base. Subsequently, fatty acid ester B, the wax compound and the dryer were added to the ink base according to the formula shown in Table 3-3, and the mixture was stirred to give each offset printing ink composition according to Comparative Examples 3-1 to 3-3.

Herein, none of the offset printing ink compositions of Examples 3-1 to 3-9, and Comparative Examples 3-1 to 3-3 contain mineral oil.

### Performance evaluation tests

The performance evaluation tests for the offset printing ink compositions of Examples 3-1 to 3-9 and Comparative Examples 3-1 to 3-3 in regard to gloss, setting property, primary blocking resistance and secondary blocking resistance were carried in the same manner as in Examples 1-1 to 1-13.

### Evaluation results

The results of the performance evaluation tests for Examples 3-1 to 3-9 and Comparative Example 3-1 to 3-3 are shown in Table 3-3.

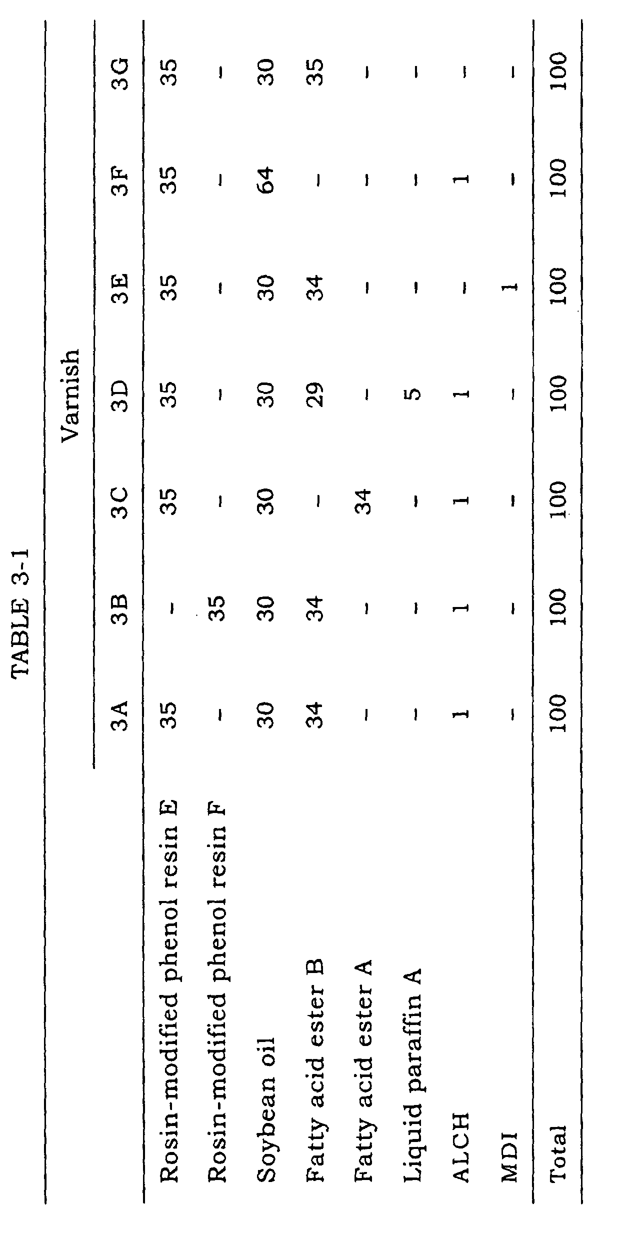

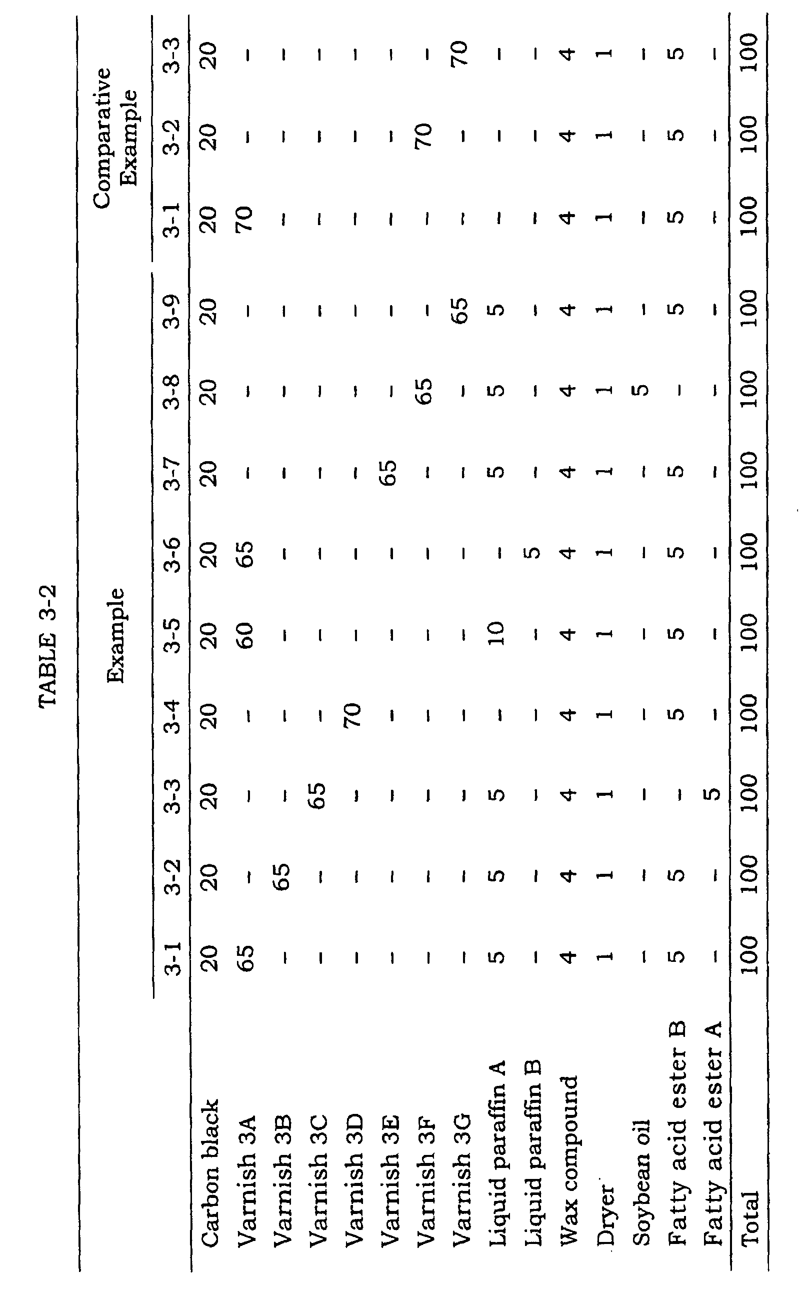

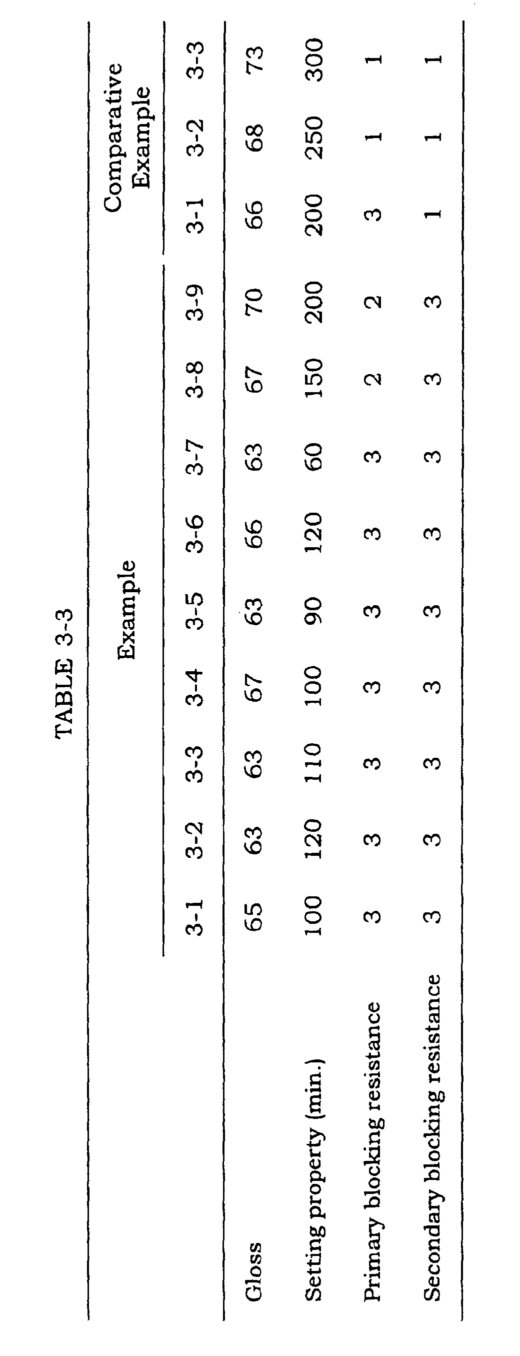

The present invention provides an offset printing ink composition capable of providing printed matters which is excellent in setting property, and primary blocking resistance and secondary blocking resistance, and which is not reduced in the gloss and drying characteristics of printed surface.

## Claims

1. An offset printing ink composition comprising mainly a coloring agent, a binder resin and a solvent containing a vegetable oil component, the ink composition further comprising as a drying characteristic improver at least one member selected from the group consisting of (A) a polymer which is obtained by polymerizing at least one of olefin monomers and diene monomers, and has a solubility parameter of less than 19 (MPa)^{1/2} and is compatible with the solvent; and (B) a liquid paraffin, wherein the total amount of the improver is 0.1 to 10 % by weight in the ink composition.

2. The offset printing ink composition of Claim 1, wherein the binder resin comprises a rosin-modified phenol resin and/or a rosin-modified maleic acid resin.

3. The offset printing ink composition of Claim 2, which contains a varnish for ink which is prepared by reacting the rosin-modified phenol resin and/or the rosin-modified maleic acid resin as the binder resin with a cross-linking agent or a gelling agent in the presence of the drying characteristic improver and the solvent.

4. The offset printing ink composition of any one of Claims 1 to 3, wherein the polymer (A) is liquid at room temperature.

5. The offset printing ink composition of any one of Claims 1 to 4, wherein all or part of the vegetable oil component is a fatty acid ester compound derived from a vegetable oil.
